# EUROPEAN PATENT APPLICATION

(11) **EP 4 613 677 A1**
(43) Date of publication of application: **10.09.2025**
(21) Application number: 24161816.4
(22) Date of filing: 06.03.2024
(51) Int. Cl.: B65G 33/02, B65G 47/28, B65G 47/84, B65G 54/02, B65G 47/80, G01N 35/04

(54) **DEVICE, SYSTEM AND METHOD FOR CONTINUOUS FEEDING OF CONTAINERS**

(71) Applicant: Syntegon Technology A/S, 4262 Sandved (DK)
(72) Inventor: RYTMAN, Simon, 4180 Soroe (DK); PETERSEN, Anders Badenska, 4684 Holme Olstrup (DK); JENSEN, Morten, 4293 Dianalund (DK)
(74) Representative: DREISS Patentanwälte PartG mbB

(57) **Abstract**

The invention relates to a device (10) for continuous feeding of containers (12) with features according to claim 1, a system for continuous feeding of containers (12) with features according to claim 10 and a method for continuous feeding of containers (12) with features according to claim 12.

## Description

### Specification

The invention relates to a device for continuous feeding of containers with features according to claim 1, a system for continuous feeding of containers with features according to claim 10 and a method for continuous feeding of containers with features according to claim 12.

When transporting containers for medical purposes, the containers are loaded into a mover. As soon as the mover is loaded, the containers are transported by the mover. During the loading process of the mover, the mover is stationary to ensure that the loading process is as accurate and safe as possible. This slows down the transport of the container. The disadvantage of this is that the stationary loading process slows down the transport of the containers.

It is the task of the present invention to provide a device, a system and a method, whereby the above disadvantages are remedied.

The above task is solved by the device for continuous feeding of containers with the features of claim 1. The container can be designed as an elongated container, a vial, an ampule, a syringe, an autoinjector or a pen (e. g. insulin pens). The container can be designed as a part of a syringe, an autoinjector or a pen. The container can have a cylindrical, oval or square shape.

The device comprises a linear magnetic transport system with a track and at least one mover. The track can be designed as a rail. The transport system can be designed at least in sections as a magnetic linear straight-line transport system. The transport system, in particular the track, can comprise curvatures. The transport system can be designed as a magnetic linear drive or as a magnetic linear actuator.

The mover is designed to move along the track by magnetic interactions. For this the mover can have at least one (permanent) magnet and the track at least one (electric) magnet that interact with each other. There can be a plurality of (electric) magnets disposed along the track.

The mover comprises at least one holder with at least one first recess for holding a container. In other words, the first recess is in particular designed to hold a single container.

The device comprises a feeding device with at least one feed wheel. The feed wheel can be designed as a star wheel. The feed wheel comprises at least one second recess for receiving the container. The feed wheel can have a plurality of second recesses, wherein at least two second recesses, in particular all second recesses, can be designed identically.

The transport system and the feeding device are designed such that the container can be transferred from the second recess of the feed wheel to the first recess of the holder of the mover continuously.

In the present case, a linear transport system refers to a system that only has one degree of freedom. In other words, the transport system is designed such that the mover can only move back and forth along the track.

With this, a continuous and fast transport of the container is possible. The holder of the mover can be loaded while moving. A continuous flow of containers can be implemented. The transport speed and thus the number of parts per minute (resp. number of transported containers per minute) can be increased.

According to an embodiment of the device, the transport system and the feeding device can be designed such that the holder of the mover is moved underneath the feed wheel with respect to the direction of gravity.

With this, a transfer of the container from the feed wheel to the holder (or their recesses) can be realized with simple means. In particular the container can be (at least partially) dropped into the first recess of the holder of the mover.

According to an embodiment of the device, the holder of the mover can comprise a third recess for receiving a section of the container. The received section of the container can be a flange.

With this, the container can be safely received and in particular be fixed or determined with respect to a rotation around its longitudinal center axis. In particular, a stop in the direction of gravity can be provided for the container. In other words, the third recess can prevent the container in particular from falling through the first recess in the direction of gravity.

According to an embodiment of the device, the transport system can comprise several movers. The transport system can be designed such that at least two movers, in particular each mover, can be controlled independently of one another. In particular, the speed of at least two movers, in particular of each mover, can be controlled independently of one another.

With this, a continuous feed and transport of the containers can be realized. Due to the independent control of the movers (resp. their speed) the synchronization between transport by the movers and feed by the feed wheel can be realized in a simple manner. The flexibility of the device can thus be increased.

According to an embodiment of the device, the feed wheel can comprise a guide rail for ejecting the container from the second recess of the feed wheel. The guide rail and the transport system are designed such that the container can be guided by the guide rail at least partially above the first recess and/or the third recess of the holder of the mover with respect to the direction of gravity. For this the guide rail can be arranged at least partially above the holder of the mover with respect to the direction of gravity.

With this, a guided and therefore exact transfer (dropping) of the container to the first and/or third recess of the holder can be realized with simple means.

According to an embodiment of the device, the feeding device can comprise a reject bin for collecting rejected container. The reject bin and the guide rail can be designed such that the container can be guided by the guide rail into the reject bin when no holder is positioned underneath the guided container with respect to the direction of gravity. In other words, if there is no holder under the guided container (that prevents the container from falling into the reject bin), the guided container can fall directly into the reject bin.

With this, a sorting out of bad containers or containers assessed as bad can be realized with simple means.

According to an embodiment of the device, the feeding device can comprise an inspection wheel with at least one fourth recess for receiving the container. The inspection wheel can have a plurality of forth recesses. The inspection wheel can be designed as a star wheel. The inspection wheel and the feed wheel can be designed such that the container can be transferred from the fourth recess of the inspection wheel to the second recess of the feed wheel. This transfer can be continuous. In particular the feed wheel and the inspection wheel can be designed to rotate with independent speeds. The rotation speed of the feed wheel and the inspection wheel can be synchronized.

With this, gaps can be created between the inspection wheel and the feed wheel. A gap refers to an unoccupied recess. In other words, a recess in which no container is arranged forms a gap.

According to an embodiment of the device, the feeding device can comprise at least one inspection device for inspecting the container while the container is positioned in the fourth recess of the inspection wheel.

With this, it can be determined whether the container is good or bad with simple means. In case that the container is good, it can be fed and transported further. In case that the container is bad, it can be rejected in the reject bin.

According to an embodiment of the device, the inspection device can comprise at least one optical sensor. The inspection device can comprise at least one camera.

With this, the inspection device can be realized with simple means.

According to an embodiment of the device, the feeding device can comprise a screw conveyor for feeding the container into the second recess of the feed wheel or the fourth recess of the inspection wheel. Alternatively, the feeding of the container into the second recess of the feed wheel or the fourth recess of the inspection wheel can be realized by a slide or a belt.

With this, the feeding of the container to the feed wheel or the inspection wheel (or their recesses) can be realized with simple means.

The above task is solved by a system for continuous feeding of containers with the features of claim 11. The system comprises a device according to the above explanations and at least one container. The container comprises a section that can be received by the holder. The container can comprise a flange that can be received by a third recess of the holder. The container can be designed as an elongated container, a vial, an ampule, a syringe, an autoinjector or a pen (e. g. insulin pens). The container can be designed as a part of a syringe, an autoinjector or a pen. The container can have a cylindrical, oval or square shape.

With regard to the advantages that can be achieved with the system, reference is made to the relevant comments on the device. The measures described in connection with the device and/or the measures explained below can be used to further design the system.

The above task is solved by a method for continuous feeding of containers with the features of claim 12. The method comprises the steps:
Receiving and transporting a container in a second recess of a feed wheel. The feed wheel can be designed as a star wheel. The receiving and transporting each can be continuous. The container can be designed as an elongated container, a vial, an ampule, a syringe, an autoinjector or a pen (e. g. insulin pen). The container can be designed as a part of a syringe, an autoinjector or a pen. The container can have a cylindrical, oval or square shape.

Transfer of the container to a first recess of a holder of a mover of a linear magnetic transport system from the second recess of the feed wheel. The transfer is continuous.

With this, a continuous and fast transport of the container is possible. The holder of the mover can be loaded while moving. A continuous flow of containers can be implemented. The transport speed and thus the number of parts per minute (resp. number of transported containers per minute) can be increased.

According to an embodiment of the method, a device according to the above explanations or a system according to the above explanations can be used to execute the method.

With regard to the advantages that can be achieved with the method, reference is made to the relevant comments on the device or system. The measures described in connection with the device, the system and/or the measures explained below can be used to further design the method.

Further features, details and advantages of the invention are apparent from the wording of the claims and from the following description of embodiments with reference to the drawings. It shows:
- Fig. 1: a perspective view of a device for continuous feeding of containers;
- Fig. 2: another perspective view of the device according to figure 1;
- Fig. 3: a cutout of a top view of the device according to figure 1;
- Fig. 4: a cutout of a perspective view from above of the device according to figure 1;
- Fig. 5: a cutout of a perspective view from below of the device according to figure 1;
- Fig. 6: a perspective view of a holder of a mover of a transport system of the device according to figure 1;
- Fig. 7: a perspective view of the mover of the transport system of the device according to figure 1 and
- Fig. 8: a side view of the holder and the mover according to figures 6 and 7.

In the following description and in the figures, corresponding components and elements have the same reference signs. For the sake of better overview, not all reference signs are shown in all figures.

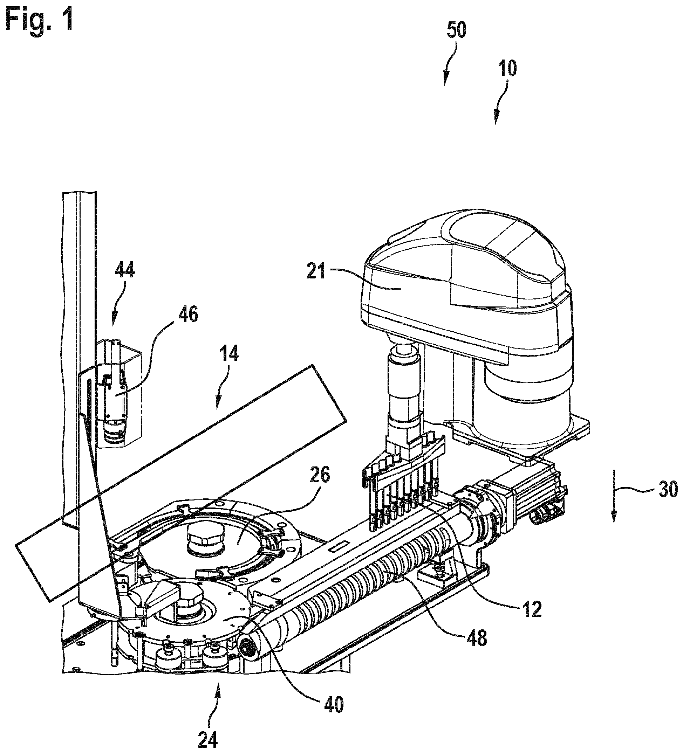

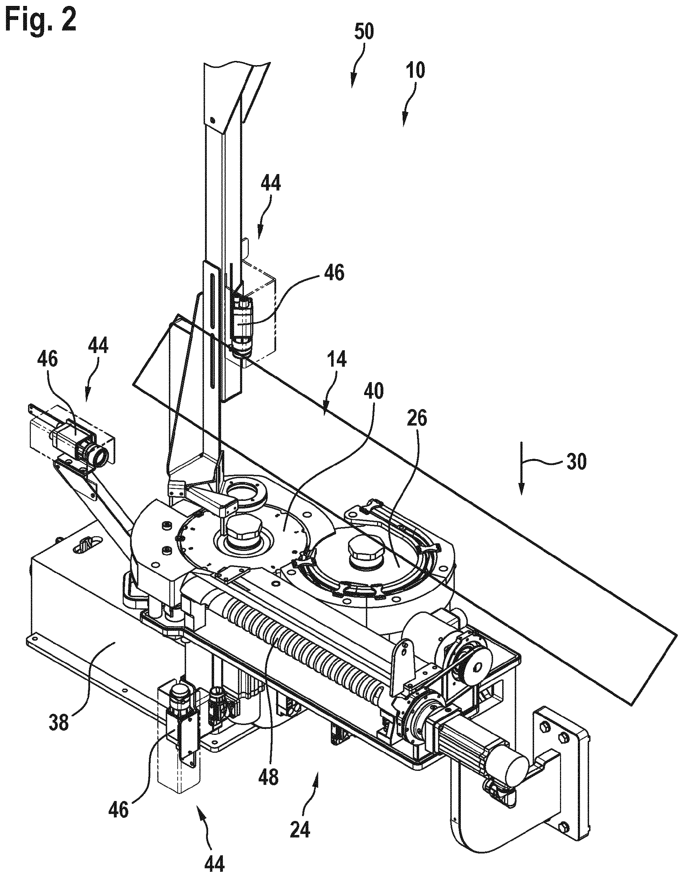

Figure 1 and Figure 2 show each a perspective view of a device 10 for continuous feeding of containers 12.

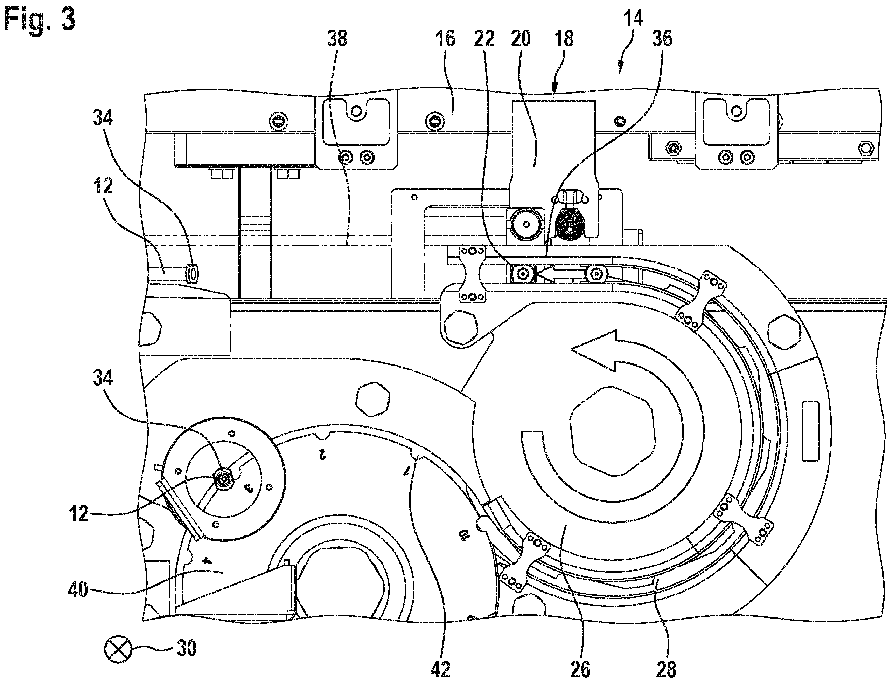

The device 10 comprises a linear magnetic transport system 14. In figures 1 and 2, the transport system 14 is only indicated schematically by means of a rectangle. The transport system 14 comprises a track 16 and at least one mover 18 (see figure 3).

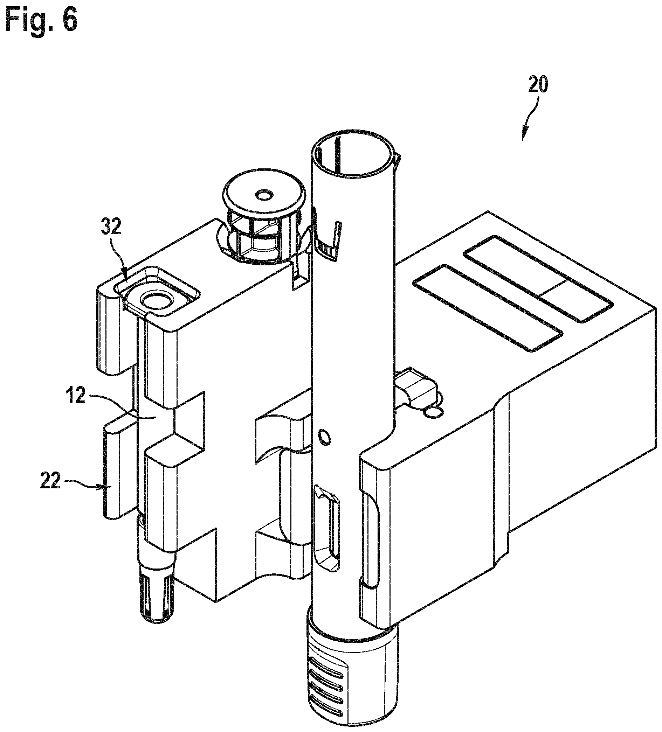

The mover 18 is designed to move along the track 16 by magnetic interaction. The mover 18 comprises at least one holder 20 with at least one first recess 22 for holding a container 12 (see figures 6 to 7).

The device 10 comprises a feeding device 24 with at least one feed wheel 26. The feed wheel 26 comprises at least one second recess 28 (see figure 3). In the present case, the feed wheel 26 is designed as a star wheel with a plurality of second recesses 28.

The transport system 14 and the feeding device 24 are designed such that the container 12 can be transferred from the second recess 28 of the feed wheel 26 to the first recess 22 of the holder 20 of the mover 18 continuously.

In the present case, the feeding device 24 comprises an inspection wheel 40 with at least one fourth recess 42 for receiving the container 12. The inspection wheel 40 and the feed wheel 26 are designed such that the container 12 can be transferred from the fourth recess 42 of the inspection wheel 40 to the second recess 28 of the feed wheel 26. This can take place continuously. In the present case, the inspection wheel 40 is designed as a star wheel with a plurality of fourth recesses 42.

The feeding device 24 can comprise at least one inspection device 44 for inspecting the container 12 while the container 12 is positioned in the fourth recess 42 of the inspection wheel 40. In the present case there are three inspection devices 44. A first inspection device 44 inspect the container 12 from above, a second inspection device 44 inspect the container 12 from below and a third inspection device 44 inspect the container 12 from the side.

The inspection device 44 can have at least one optical sensor. The inspection device 44 can have at least one camera 46. In the present case, all three inspection devices 44 each have a camera 46 (see figure 2).

In the present case, the feeding device 24 comprises a screw conveyor 48 for feeding the container 12 into the fourth recess 42 of the inspection wheel 40. It is also conceivable that the screw conveyor 48 can be designed to feed the container 12 into the second recess 28 of the feed wheel 26 directly.

In the present case, the device 10 comprises a feeding robot 21 for feeding the container 12 to the screw conveyor 48 (see figure 1). In the present case, the feeding robot 21 is designed to feed several, in particular ten, containers 12 at the same time to the screw conveyor 48.

Figure 3 shows a cutout of a top view of the device 10 according to figure 1.

In the present case, the transport system 14 and the feeding device 24 are designed such that the holder 20 of the mover 18 is moved underneath the feed wheel 26 with respect to the direction of gravity 30.

In the present case, there are several movers 18, which are designed identically. Accordingly, several containers 12 can be held and transported along the track 16.

At least two movers 18, in particular all movers 18, can be controlled independently of one another. It is conceivable that the speed or other individual parameters of at least two movers 18, in particular all movers 18, can be controlled independently of one another.

The transport system 14 is designed as a linear transport system. In other words, the movers 18 are designed to move back and/or forth along the track 16. Thus, the movers 18 each have one degree of freedom of movement.

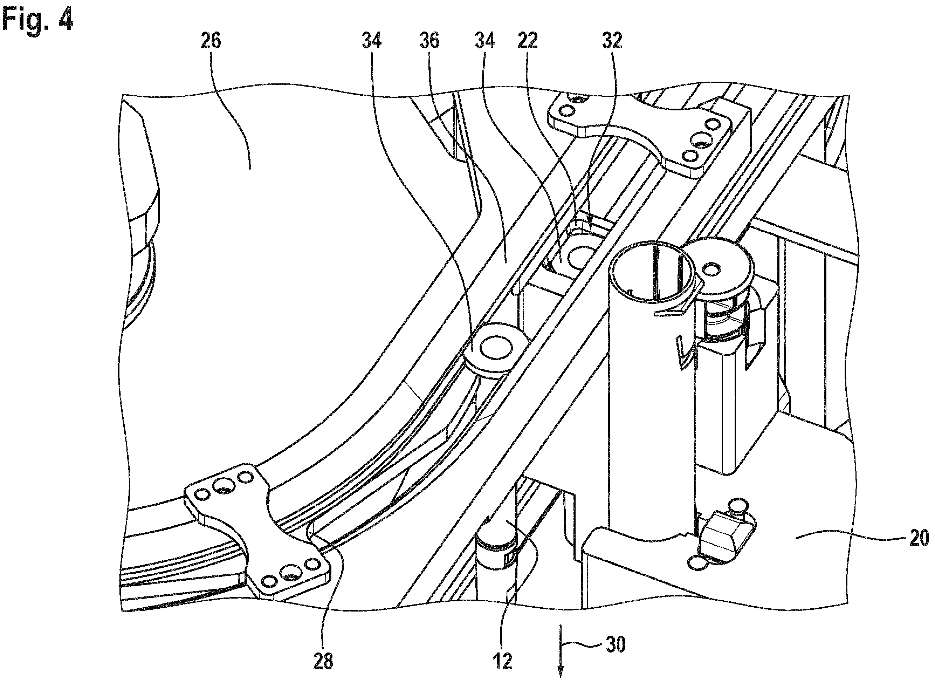

Figure 4 shows a cutout of a perspective view from above of the device 10 according to figure 1.

In the present case, the feed wheel 26 comprises a guide rail 36 for ejection the container from the second recess 28 of the feed wheel 26. The guide rail 36 and the transport system 14 are designed such that the container 12 can be guided by the guide rail 36 at least partially above the first recess 22 of the holder 20 of the mover 18 with respect to the direction of gravity 30.

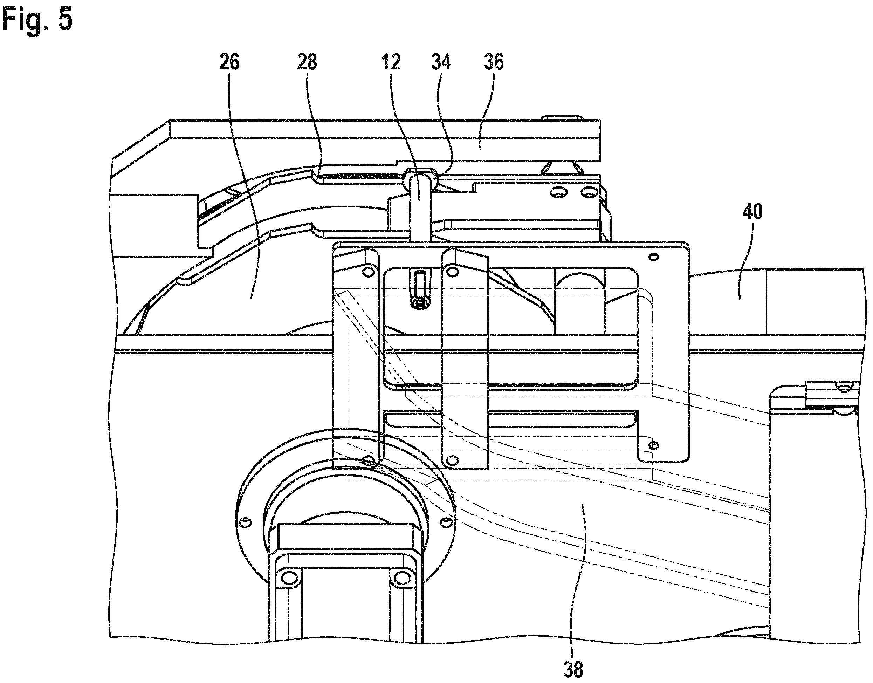

Figure 5 shows a cutout of a perspective view from below of the device 10 according to figure 1.

In the present case, the feeding device 24 comprises a reject bin 38 for collecting rejected containers 12. The reject bin 38 and the guide rail 36 are designed such that the container 12 can be guided by the guide rail 36 into the reject bin 38 when no holder 20 is positioned underneath the guided container 12 with respect to the direction of gravity 30. In other words, the rejected container 12 can be dropped into the reject bin 38 if there is no holder 20 blocking the drop path of the rejected container 12.

Figure 6 shows a perspective view of the holder 20 of the mover 18 of the transport system 14 of the device 10 according to figure 1.

In the present case, the holder 20 of the mover 18 comprises a third recess 32 for receiving a section of the container 12. In the present case, the third recess 32 is designed to receive a flange 34 of the container 12. In the present case, the container 12 is designed as a syringe or as a part of a syringe. The container 12 can be designed as a part of an autoinjector or as a part of a pen (e. g. insulin pen).

In the present case, the guide rail 36 and the transport system 14 are designed such that the container 12 can be guided by the guide rail 36 at least partially above the third recess 32 of the holder 20 of the mover 18 with respect to the direction of gravity 30 (see figure 4). The guide rail 36 and the transport system 14 are designed such that in particular the flange 34 of the container can be guided by the guide rail 36 above the third recess 32 of the holder 20 of the mover 18 with respect to the direction of gravity 30.

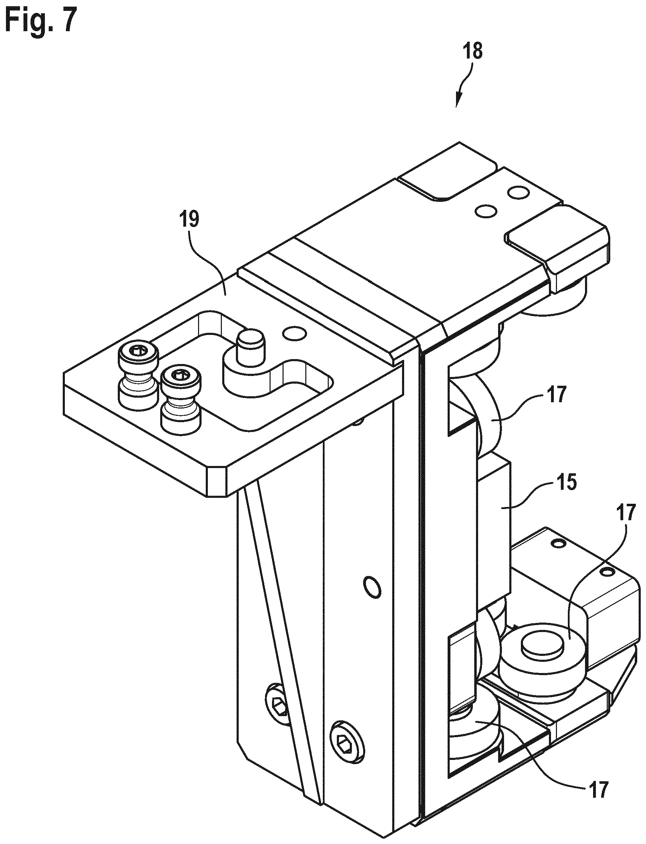

Figure 7 shows a perspective view of the mover 18 of the transport system 14 of the device 10 according to figure 1.

The mover 18 is designed to move along the track 16 by magnetic interactions. For this the mover 18 can have at least one (permanent) magnet 15 and the track 16 at least one (electric) magnet (not shown) that interact with each other. There can be a plurality of (electric) magnets disposed along the track 16.

In the present case, the mover 18 have several wheels 17 that roll on the track 16 and thus enable or facilitate the movement of the mover 18 along the track 16.

In the present case, the mover 18 comprises a platform 19. The mover 18 and the holder 20 are designed such that the holder 20 can be positioned and fixed on the platform 19 of the mover 18.

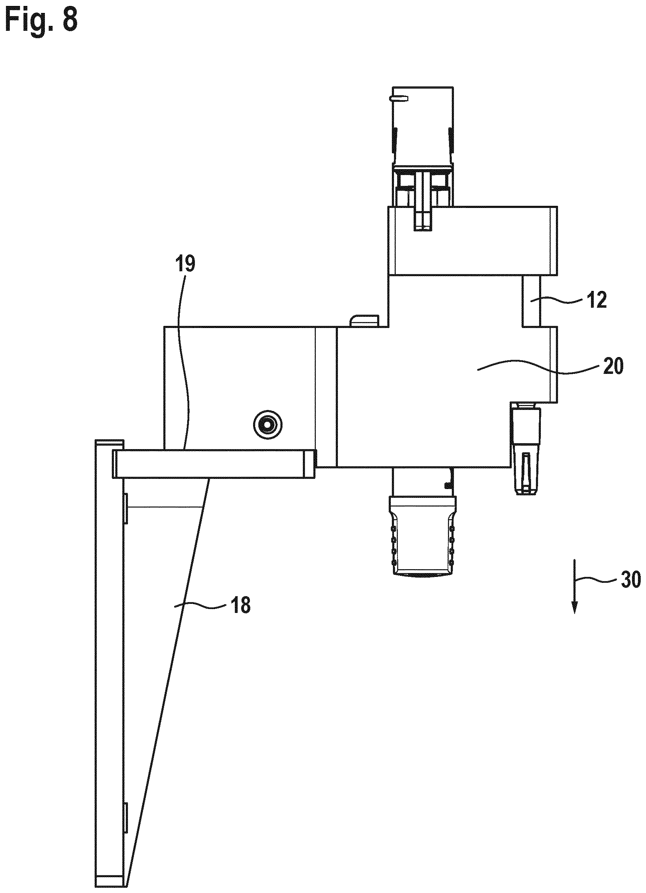

Figure 8 shows a side view of the holder 20 and the mover 18 according to figures 6 and 7.

In figure 8, the holder 20 is positioned and fixed on the platform 19 of the mover 18. In the present case, the holder 20 is positioned above the mover 18 with regard to the direction of gravity 30.

The device 10 according to the above explanations and at least one container 12 can form or be part of a system 50 for continuous feeding of containers 12. In particular, the device 10 and at least one container 12 shown in the figures 1 to 8 can form or be part of the system 50.

The container 12 of the system 50 comprises a section, in particular a flange 34, that can be received by the holder 20, in particular by a third recess 32 of the holder 20 (see figure 6).

A method for continuous feeding of containers 12 is explained in the following with reference to figures 1 to 8 :
The method comprises the steps:
Receiving and transporting a container 12 in a second recess 28 of a feed wheel 26.

Transfer of the container 12 to a first recess 22 of a holder 20 of a mover 18 of a linear magnetic transport system 14 from the second recess 28 of the feed wheel 26. The transfer is continuous.

The container 12 can be at least partially dropped into the first recess 22 of the holder 20 of the mover 18 during the transfer. The container 12 can be dropped into a reject bin 38, when the container 12 has been assessed as a bad container, in particular by an inspection device 44.

A speed of the mover 18 and a speed of the second recess 28 of the feed wheel 26 (or rotating speed of the feed wheel 26) can be synchronized.

A device 10 or a system 50 according to the above explanations can be used to execute the method. In particular, the device 10 or the system 50 shown in the figures 1 to 8 can be used to execute the method.

## Claims

1. Device (10) for continuous feeding of containers (12) comprising a linear magnetic transport system (14) with a track (16) and at least one mover (18),
- wherein the mover (18) is designed to move along the track (16) by magnetic interaction,
- wherein the mover (18) comprises at least one holder (20) with at least one first recess (22) for holding a container (12),
- wherein the device (10) comprises a feeding device (24) with at least one feed wheel (26),
- wherein the feed wheel (26) comprises at least one second recess (28) for receiving the container (12),
- wherein the transport system (14) and the feeding device (24) are designed such that the container (12) can be transferred from the second recess (28) of the feed wheel (26) to the first recess (22) of the holder (20) of the mover (18) continuously.

2. Device (10) according to claim 1, **characterized in that** the transport system (14) and the feeding device (24) are designed such that the holder (20) of the mover (18) is moved underneath the feed wheel (26) with respect to the direction of gravity (30).

3. Device (10) according to claim 1 or 2, **characterized in that** the holder (20) of the mover (18) comprises a third recess (32) for receiving a section, in particular a flange (34), of the container (12).

4. Device (10) according to any one of the preceding claims, **characterized in that** the transport system (14) comprises several movers (18), wherein the transport system (14) is designed such that at least two movers (18), in particular each mover (18), in particular their speed along the track (16), can be controlled independently of one another.

5. Device (10) according to any one of the preceding claims, **characterized in that** the feed wheel (26) comprises a guide rail (36) for ejecting the container (12) from the second recess (28) of the feed wheel (26), wherein the guide rail (36) and the transport system (14) are designed such that the container (12) can be guided by the guide rail (36) at least partially above the first recess (22) and/or the third recess (32) of the holder (20) of the mover (18) with respect to the direction of gravity (30).

6. Device (10) according to the preceding claim, **characterized in that** the feeding device (24) comprises a reject bin (38) for collecting rejected containers (12), wherein the reject bin (38) and the guide rail (36) are designed such that the container (12) can be guided by the guide rail (36) into the reject bin (38) when no holder (20) is positioned underneath the guided container (12) with respect to the direction of gravity (30).

7. Device (10) according to any one of the preceding claims, **characterized in that** the feeding device (24) comprises an inspection wheel (40) with at least one fourth recess (42) for receiving the container (12), wherein the inspection wheel (40) and the feed wheel (26) are designed such that the container (12) can be transferred from the fourth recess (42) of the inspection wheel (40) to the second recess (28) of the feed wheel (26), in particular continuously.

8. Device (10) according to the preceding claim, **characterized in that** the feeding device (24) comprises at least one inspection device (44) for inspecting the container (12) while the container (12) is positioned in the fourth recess (42) of the inspection wheel (40).

9. Device (10) according to the preceding claim, **characterized in that** the inspection device (44) comprises at least one optical sensor, in particular a camera (46).

10. Device (10) according to any one of the preceding claims, **characterized in that** the feeding device (24) comprises a screw conveyor (48) for feeding the container (12) into the second recess (28) of the feed wheel (26) or the fourth recess (42) of the inspection wheel (40).

11. System (50) for continuous feeding of containers (12) comprising a device (10) according to any one of the preceding claims and at least one container (12), wherein the container (12) comprises a section, in particular a flange (34), that can be received by the holder (20), in particular by a third recess (32) of the holder (20).

12. Method for continuous feeding of containers (12) comprising the steps:
- Receiving and transporting a container (12) in a second recess (28) of a feed wheel (26);
- Transfer of the container (12) to a first recess (22) of a holder (20) of a mover (18) of a linear magnetic transport system (14) from the second recess (28) of the feed wheel (26), wherein the transfer is continuous.

13. Method according to the preceding claim, **characterized in that** the container (12) is at least partially dropped into the first recess (22) of the holder (20) of the mover (18) during the transfer.

14. Method according to claim 12 or 13, **characterized in that** a speed of the mover (18) and a speed of the second recess (28) of the feed wheel (26) are synchronized.

15. Method according to any one of the claims 12 to 14, **characterized in that** a device (10) according to any one of the claims 1 to 10 or a system (50) according to claim 11 is used to execute the method.
